# FASCICULE DE BREVET EUROPEEN

(11) **EP 0 587 484 B1**
(45) Date de publication et mention de la délivrance du brevet: **02.01.1997**
(21) Numéro de dépôt: 93402158.5
(22) Date de dépôt: 03.09.1993
(51) Int. Cl.: A63F 3/06, G06K 17/00, G06K 13/067

(54) **Dispositif d'analyse de supports d'informations de bulletins de jeu**
Vorrichtung zur Analyse von Informationsträgern von Spielscheinen
Device for analysing information carriers of game forms

(30) Priorité: 07.09.1992 FR 9210642
(43) Date de publication de la demande: 16.03.1994
(73) Titulaire: INTERNATIONALE DES JEUX, F-92643 Boulogne Billancourt Cédex (FR)
(72) Inventeur: Gatto, Jean-Marie, F-75016 Paris (FR); Bertrand, Dominique, F-75017 Paris (FR)
(74) Mandataire: Obolensky, Michel

(56) Documents cités:
- BE-A- 1 000 649
- FR-A- 2 661 529
- US-A- 4 098 458
- US-A- 4 301 361
- US-A- 4 365 151
- US-A- 4 724 307

## Description

La présente invention est relative aux dispositifs de saisie de documents par analyse de supports d'informations, et se rapporte plus particulièrement aux dispositifs d'analyse de bulletin ou de reçus de jeux.

Un certain nombre de jeux, notamment de jeux de loterie consiste à faire remplir par le joueur un bulletin comprenant une grille formée de cases dans lesquelles le joueur place des signes pour former une combinaison sur laquelle il parie.

Ces bulletins de jeux sont remis par les joueurs à des bureaux de jeu équipés de terminaux et des reçus leur sont délivrés en contre-partie des bulletins, ainsi que de l'acquittement d'un enjeu correspondant.

Les terminaux de jeu sont généralement équipés de dispositifs d'analyse ou lecteurs de bulletins et de reçus qui permettent l'élaboration de signaux codés transmis à une unité centrale dans laquelle les jeux des joueurs sont mis en mémoire jusqu'au tirage.

Les lecteurs classiques sont du type à lecture globale d'une case par analyse case par case du document et de reconnaissance positive des signes correspondant aux jeux des joueurs.

De tels systèmes sont d'une construction et d'une mise en oeuvre relativement complexes.

Lorsque le document de jeu tel qu'un bulletin est mal rempli par le joueur, par exemple par un mauvais cadrage des signes de jeu dans les cases correspondantes, les systèmes classiques ont du mal à valider le bulletin.

Ils ne peuvent pas non plus toujours reconnaître certains documents tels que des reçus lorsqu'ils présentent d'importants défauts d'impression.

Les systèmes actuels ne permettent pas non plus la reconnaissance détaillée des signes inscrits par les joueurs tels que croix, ronds, etc...

On connaît d'après US-A-4 724 307, un lecteur de cartes portant des marques inscrites à la main positionnées pour coder des données, ledit lecteur comprenant un enregistreur d'image pour capter une image instantanée de la zone pouvant porter un repère de la carte, comprenant les marques inscrites à la main et des marques d'identification imprimées sur la carte. Un processeur de données numérise les données en une matrice de pixels représentant des niveaux de gris en des points espacés de l'image.

Des moyens numériques sont prévus pour placer les marques d'identification et pour définir les zones de marques attendues du champ d'image tout en prenant en compte une erreur de positionnement telle que la distorsion d'image et pour placer le champ d'image dans les zones susceptibles de porter des marques.

On connaît en outre d'après FR-A-2 661 529, un dispositif de traitement d'imprimées propres à être complétés dans une zone prédéfinie subdivisable en sections élémentaires, comprenant :
- une unité de lecture propre d'une part à recevoir et à entraîner l'imprimé, d'autre part à l'analyser optiquement, et
- une unité d'exploitation de cette analyse optique en fonction de ladite zone prédéfinie,
l'unité de lecture comprenant :
- une barrette de sources de lumière bicolores, associée à une barrette de photodétecteurs sensibles aux deux couleurs, agencées pour coopérer optiquement avec l'imprimé dans la direction de colonne d'une façon sélective quant à la couleur, tenant compte de la position de ladite zone prédéfinie, cette barrette de photodétecteurs étant munie d'une mémoire analogique de lecture adressable le long de la colonne et propre à stocker pour chaque pixel son intensité lumineuse,
- des moyens d'entraînement de l'imprimé à vitesse contrôlée en regard de la barrette de photodétecteurs dans le sens de ligne,
l'unité d'exploitation comprenant :
- des moyens de prétraitement propres à adresser ladite mémoire analogique au cours dudit entraînement de l'imprimé, à convertir, pour chaque pixel, son intensité lumineuse en un bit d'après un seuil, et stocker les bits ainsi obtenus dans un mémoire de travail, et
- des moyens de traitement propres à analyser le contenu de cette mémoire de travail par détermination d'un taux de bits à 1 dans chaque section élémentaire de ladite zone prédéfinie.

L'invention vise à remédier aux inconvénients des lecteurs classiques en créant un dispositif d'analyse de supports d'informations qui tout en étant d'une construction relativement simple, assure une reconnaissance et une lecture exactes des documents qui lui sont présentés.

Elle a donc pour objet un dispositif d'analyse de bulletins de jeu ou de reçus comprenant des moyens d'introduction du support, des moyens de lecture des informations se trouvant sur le support, des moyens de traitement des informations lues sur le support en vue de leur conversion en données numériques et de leur transmission vers une unité centrale de gestion des jeux, dans lequel les moyens de lecture des informations se trouvant sur le support comprennent un lecteur optique aveugle à au moins une couleur dans laquelle des informations fixes sont imprimées sur le bulletin et sensible à d'autres couleurs, afin de ne prendre en compte que les informations variables de jeu et les informations fixes de cadrage du bulletin et de désignation du type de jeu auquel il appartient, imprimées dans ces autres couleurs, caractérisé en ce que lesdits moyens de traitement comprennent pour l'analyse des bulletins de jeu, des moyens de génération de systèmes de repérage correspondant au type de jeu auquel appartient le bulletin en vue de la reconstitution des zones à analyser du bulletin par superposition aux données variables et aux données fixes de cadrage et de type de jeu, des données fixes de système de repérage auxquelles le lecteur d'image a été rendu aveugle.

L'invention sera mieux comprise à l'aide de la description qui va suivre, donnée uniquement à titre d'exemple et faite en se référant aux dessins annexés, sur lesquels :
- la Fig.1 est une vue schématique en perspective du dispositif d'analyse suivant l'invention;
- la Fig.2 est une vue schématique en coupe transversale du dispositif de la Fig.1;
- la Fig.3 montre un bulletin de jeu destiné à être traité par le dispositif suivant l'invention;
- la Fig.4 montre les données du bulletin de jeu de la Fig.3 retenues par le dispositif de lecture suivant l'invention;
- la Fig.5 montre un reçu émis par le terminal et analysé par le dispositif suivant l'invention;
- la Fig.6 est une vue à plus grande échelle du code barre du reçu de la Fig.5 montrant le mode d'analyse dudit code suivant l'invention;
- la Fig.7 est un organigramme illustrant le fonctionnement du dispositif d'analyse suivant l'invention pour un bulletin de jeu; et
- la Fig.8 est un organigramme illustrant le fonctionnement du dispositif d'analyse pour un reçu.

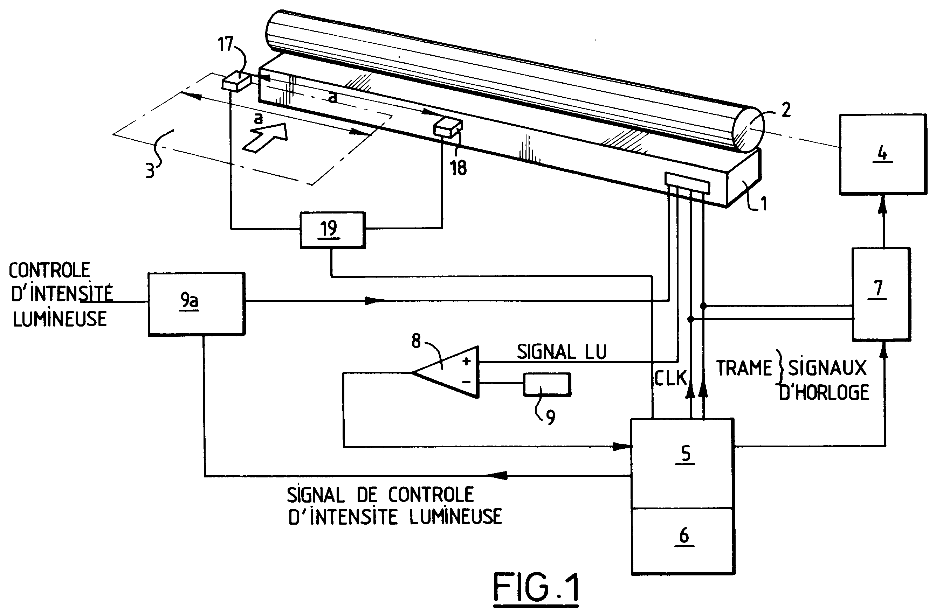

Le dispositif d'analyse représenté schématiquement à la Fig.1 comporte principalement un détecteur d'image 1 disposé en regard d'un rouleau 2 d'entraînement d'un document 3 à analyser.

Le rouleau 2 est relié à un moteur électrique pas à pas 4 destiné à permettre l'analyse du document 3 par lignes de balayage successives avec une résolution verticale qui est fonction du pas adopté pour le déplacement du rouleau 2.

Au détecteur d'images 1 est connecté un dispositif de traitement de données qui comporte une mémoire 6 de stockage temporaire des données numériques d'image, avant leur transmission à une unité centrale de gestion de jeux (non représentée).

Le dispositif de la Fig.1 comporte en outre un circuit logique 7 de commande du moteur électrique pas à pas 4 et un comparateur 8 connecté entre la sortie de données du détecteur d'images 1 et l'entrée de l'unité de traitement et destiné à comparer le signal de sortie du détecteur avec un signal de référence délivré par une source de signaux 9, ainsi qu'un circuit 9a de contrôle d'intensité lumineuse qui reçoit un signal de contrôle d'intensité lumineuse provenant de l'unité de traitement 5.

Ainsi, l'unité de traitement 5 pourra par comparaison, déterminer une intensité correcte de la source lumineuse, appropriée au traitement en cours.

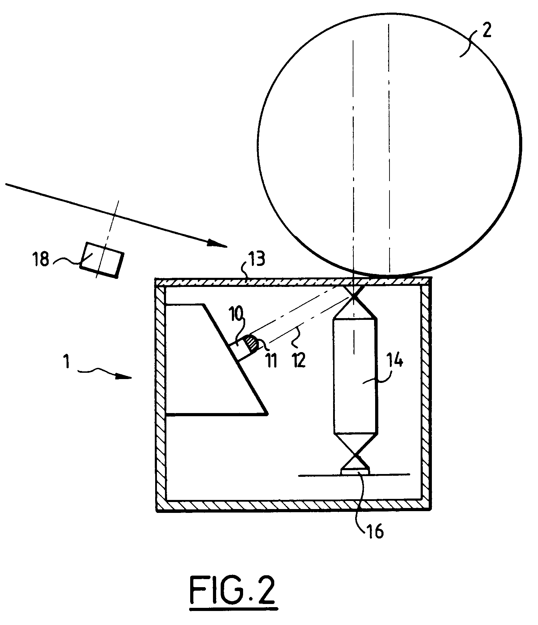

Comme représenté à la Fig.2, le détecteur 2 d'image 1 comporte une rangée de diodes électroluminescentes 10 dont le nombre est fonction de la résolution horizontale et de l'intensité lumineuse requises.

A ces diodes 10 sont associés des organes 11 de focalistion et de filtrage de la lumière destinés à focaliser ces faisceaux sur une paroi transparente 13 du boîtier du détecteur contre laquelle doit être appliquée la face du document à analyser qui porte d'une part des inscriptions fixes telles qu'une grille de jeu, des numéros de cases de la grille, des indications de date et autres, imprimés dans la couleur de la lumière émise et qui ne seront donc pas reproduites par le dispositif et d'autre part des inscriptions variables portées par le joueur dans la grille de jeu dans une couleur différente de celle de la lumière émise, ainsi que des inscriptions fixes telles que des repéres de cadrage, un code relatif au type de jeu auquel appartient le bulletin imprimé dans une couleur différente de celle de la lumière émise et qui seront reproduites.

En regard de la zone de focalisation des faisceaux émis par les diodes électroluminescentes 10, sont disposés des conducteurs de lumière 14 de transmission des faisceaux vers des éléments photo-sensibles 16.

Le plan de symétrie du rouleau 2 et l'axe optique des conducteurs de lumière 14 présentent un léger décalage dans le sens de l'introduction d'un document pour permettre au bord avant de ce document de réfléchir la lumière émise par la source de lumière monochromatique traduisant ainsi la présence du document à cet emplacement.

De manière avantageuse, les organes 11 de focalisation et de filtrage des faisceaux émis par les diodes électroluminescentes 10 sont réalisés sous la forme de lentilles plan-concaves épaisses dont la face concave présente une courbure telle que le faisceau sortant d'une lentille chevauche le faisceau sortant d'une lentille voisine.

Ainsi, la lumière émise par l'ensemble des diodes électroluminescente à l'aspect d'un trait lumineux continu monochromatique de couleur rouge par exemple.

Ainsi, toutes les parties d'un bulletin imprimées en rouge n'apparaissent pas sur l'image du bulletin donnée par le dispositif, alors que les parties imprimées ou portant des marques d'autres couleurs apparaissent.

Le dispositif comporte en outre des détecteurs 17,18 disposés en regard de la fente entre le rouleau 2 et le détecteur d'image 1, à une distance axiale l'un de l'autre légèrement supérieure à la dimension transversale a du plus petit document à lire.

Les sorties des détecteurs 17,18 sont connectées à l'unité de traitement.

Un tel agencement permet de distinguer entre un document de faible largeur tel qu'un reçu qui provoque l'actionnement d'un seul détecteur, et un document de plus grande largeur tel qu'un bulletin de jeu qui déclenche deux détecteurs et de provoquer dans l'unité de traitement 5, l'intervention d'un programme approprié au traitement du document correspondant.

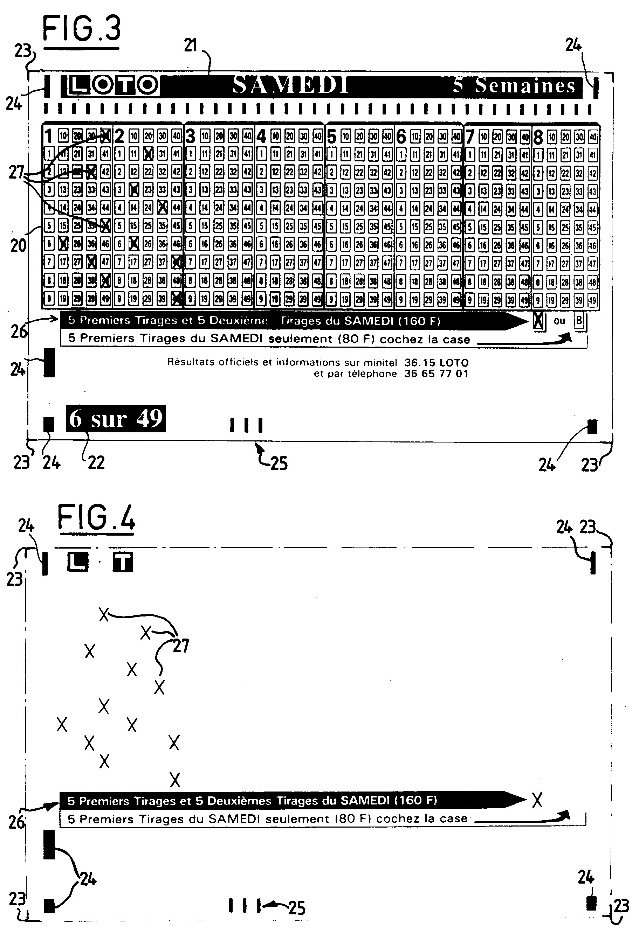

On a représenté sur la Fig.3, un bulletin de jeu de loto qui comporte une grille de jeu 20 contenant des numéros imprimés dans la couleur d'émission des sources lumineuses du détecteur, c'est à dire en rouge dans le present exemple.

Ce bulletin porte en outre imprimée en rouge, une plage supérieure 21 indiquant le jour et la durée de validité du bulletin et à gauche de cette plage, le mot "LOTO" est imprimé sur fond bleu pour les lettres L et T et sur fond rouge pour les lettres O.

Le billet comporte de plus une plage inférieure 22 à fond rouge sur laquelle apparaît en blanc l'inscription "6 sur 49" indiquant le nombre de numéros à cocher.

Les autres plages du bulletin sont imprimées dans des couleurs permettant leur détection par le dispositif de lecture.

Il s'agit des zones 23,24 de cadrage du bulletin, d'une zone 25 d'identification du type de jeu auquel appartient le bulletin et d'inscriptions 26 indiquant par exemple le nombre de tirages et le prix correspondant à payer.

Enfin, des marques en forme de croix 27 ont été portées par un joueur sur le bulletin et constituent les données variables de celui-ci.

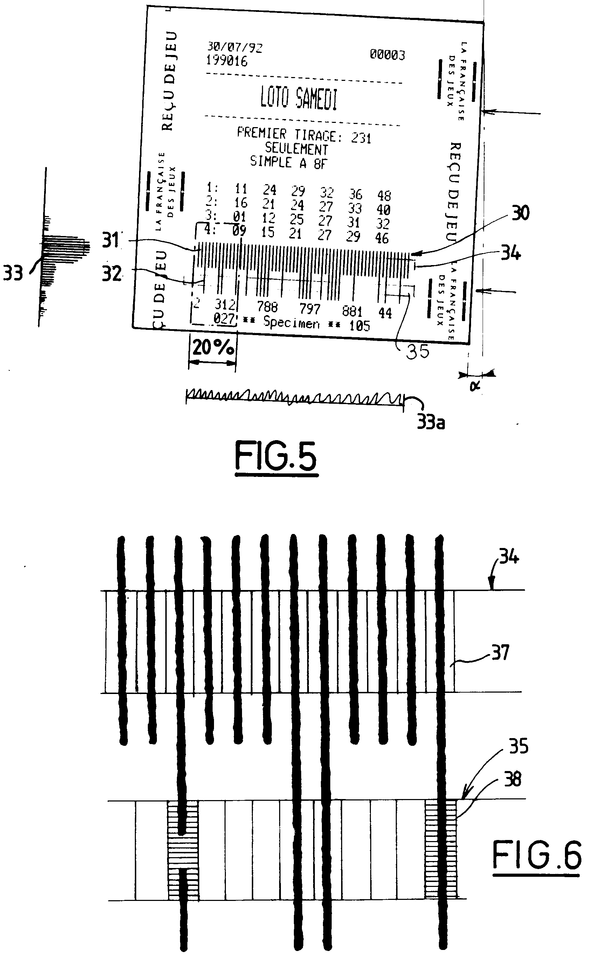

Sur la Fig.4, on a représenté l'image du bulletin de la Fig.3 qui résulte de l'analyse par le dispositif suivant l'invention et qui apparaît sur les moyens d'affichage associés à celui-ci.

On voit que toutes les zones imprimées sur le bulletin dans la couleur à laquelle le dispositif a été rendu aveugle, ont disparu de l'image du bulletin et que seules subsistent les données variables constituées par les croix 27 portées par le joueur et les données fixes imprimées dans d'autres couleurs que le rouge telles que les repères de cadrage 23,24, et le code 25 désignant le type de jeu ainsi que certaines inscription telles que 26.

Ainsi qu'on le verra par la suite, l'image du bulletin de la Fig.4 sera complétée par superposition aux informations de la Fig.4 de l'image, d'un système de repérage, par exemple une grille d'analyse de jeu identique au système de repérage 20 du bulletin de la Fig.3 ici constitué par une grille, mais pouvant également être d'une autre nature.

Sur la Fig.5, on a représenté l'image d'un reçu de jeu délivré par le terminal de jeu au joueur et dont le dispositif d'analyse suivant l'invention assure également la lecture.

Le reçu comporte également un certain nombre de zones destinées à être analysées et en particulier une zone 30 contenant un code à barres de validation du bulletin présenté par un joueur.

Il s'agit d'un code qui doit être identifié et comparé à un code correspondant stocké dans l'unité centrale.

Ce code qui est quelquefois imprimé avec des défauts d'impression, doit être reconnu par le dispositif suivant l'invention avec un maximum de précision.

Il est constitué d'une première partie 31 formée de barres disposées à intervalles réguliers et qui matérialisent des signaux d'horloge et d'une seconde partie 32 formées de barres définissant des signaux de données correspondant au code de validation proprement dit.

A gauche du reçu ainsi constitué est représenté un histogramme 33 du code à barres généré par le dispotif d'analyse destiné au calcul de la séparation des signaux d'horloge et des signaux de donnés.

Au-dessous du bord inférieur du reçu est représenté un histogramme horizontal 33a destiné au calcul de l'angle d'inclinaison α du reçu.

L'analyse du reçu est assurée par exploration de deux secteurs rectangulaires 34,35 définis dans les parties 31 et 32 du code à barres.

Les positions des secteurs 34 et 35 sont choisies de chaque côté de la ligne de séparation des signaux d'horloge et des signaux de données.

Comme représenté à la Fig.6, dans le secteur 34 de la partie 31 du code à barres matérialisant les signaux d'horloge, on définit des fenêtres adjacentes 37 entourant chacune une portion de barre.

Ensuite, dans le secteur 35 de la partie 32 du code à barres correspondant aux signaux de données, on définit des fenêtres 38 entourant chacune l'emplacement éventuel d'une portion de barre et on détermine par exploration ligne par ligne la présence ou l'absence d'une barre dans chaque fenêtre 38.

Cette exploration tient compte des défauts d'impression, car il est admis par convention que la détection de par exemple 60% des points sur la totalité des points formant une barre, confirme la présence d'une barre et entraîne sa prise en compte pour l'analyse du code.

On procède ensuite au comptage des signaux de données en effectuant une opération logique ET entre une barre d'horloge et une barre de données se trouvant éventuellement en regard de cette barre d'horloge.

La présence simultanée d'une barre d'horloge et d'une barre de données engendre l'émission d'un 1 logique, tandis que la présence d'une barre d'horloge et l'absence d'une barre de données engendre l'émission d'un O logique.

On voit donc qu'ainsi on arrive à reconstituer avec une grande précision, le numéro de validation porté par le reçu.

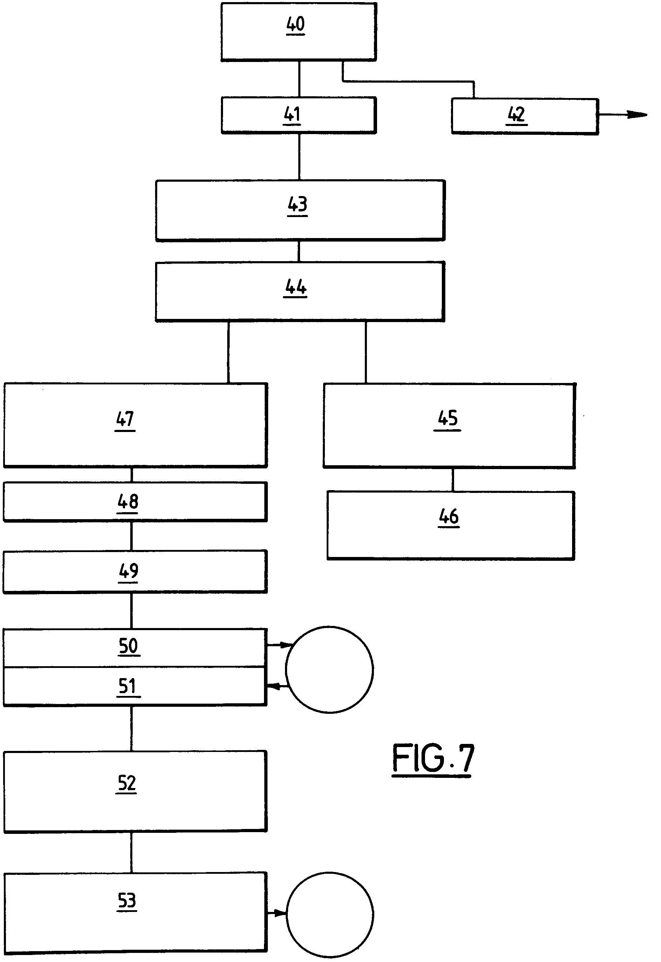

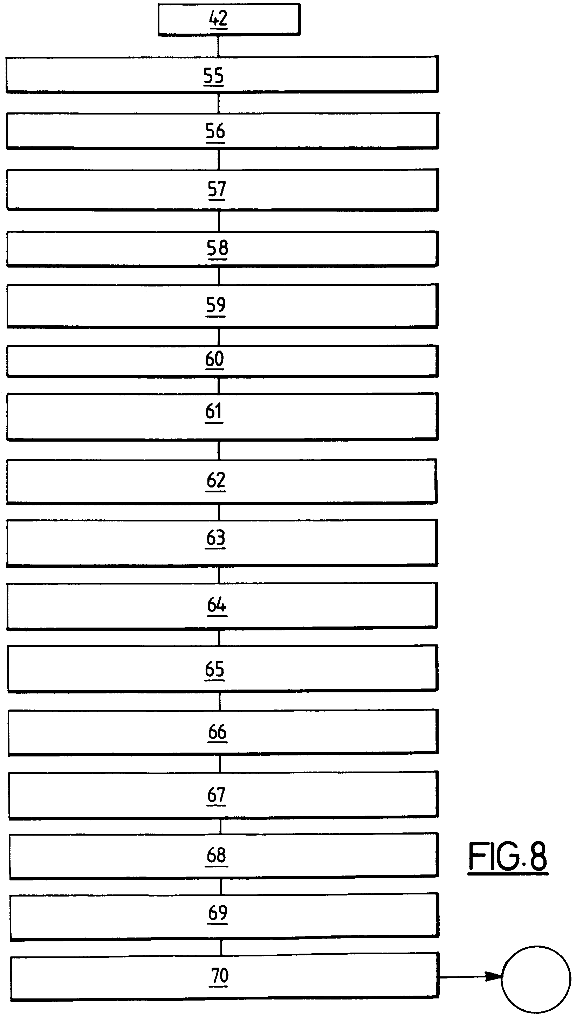

Le déroulement d'une opération d'analyse à l'aide du dispositif suivant l'invention va maintenant être décrit en référence aux organigrammes des Fig.7 et 8.

L'opération d'exploration est déclenchée par la présentation d'un document au dispositif d'analyse par introduction entre le rouleau 2 et le détecteur d'image 1.

Comme représenté à la Fig.2, le plan de symétrie du rouleau 2 perpendiculaire à la face transparente 13 du détecteur est décalé par rapport à l'axe optique de l'ensemble de conducteurs de lumière 14 pour que le bord d'un document engagé entre le rouleau 2 et le détecteur de lumière 1 puisse se trouver au-delà de cet axe optique et que le document réfléchisse la lumière provenant des diodes électroluminescentes 10 dès sa mise en place.

Le parallèlisme entre le bord du document et la lignes de diodes électroluminescentes est vérifié en prévoyant qu'un nombre minimum d'éléments photosensibles 16 doivent recevoir de la lumière réfléchie par le bord du document pour admettre que sa position par rapport à la ligne de diodes est correcte, c'est à dire que son défaut de parallèlisme vis à vis de la ligne de diodes est tolérable.

On peut également vérifier ce parallélisme en déterminant une distance minimale entre deux éléments photosensibles éclairés. Quand cette distance minimale ou le nombre minimal d'éléments photosensibles est atteint, le dispositif de traitement actionne le moteur pas-à-pas d'entraînement du rouleau 2 et la lecture ligne par ligne du document peut être effectuée. La distance minimale entre deux éléments ou le nombre minimal d'éléments électroluminescents éclairés sont différents selon la dimension transversale du document à analyser.

La mise en place d'un document sur le dispositif d'analyse est effectuée à la phase 40.

Au cours des phases 41 et 42, il y a détermination au moyen des détecteurs 17,18, si le document est un bulletin ou un reçu.

Si le document est un reçu, son traitement sera examiné en référence à la Fig.8.

Si le document est un bulletin de jeu, au cours de la phase 43 on recherche les bords du bulletin matérialisés par huit repères 23 représentés aux Fig.3 et 4 en vue du cadrage approximatif du bulletin.

A partir du cadrage réalisé, on procède à la recherche de marques 24 de cadrage précis du bulletin et qui sont représentées aux Fig.3 et 4 par des pavés.

Cette recherche est assurée à la phase 44. Si le bulletin ne comporte pas de marques de cadrage précis, on établit au cours de la phase 45, que le bulletin examiné est un bulletin du type ancien qui nécessite au cours d'une procédure matérialisée globalement par une phase 46, une recherche spécifique correspondant à chaque bulletin.

Si le bulletin comporte des marques 24, on établit au cours de la phase 47 qu'il s'agit d'un bulletin pouvant être traité par le dispositif.

Au cours de la phase 48, on établit l'inclinaison du bulletin par rapport à la génératrice du rouleau 2 et le système de traitement compense cette inclinaison.

Au cours de la phase ultérieure 49, on recherche sur le bulletin, le code relatif au type de jeu auquel il appartient et qui est représenté en 25 aux Fig.3 et 4.

Au cours de la phase 50, on procède à l'envoi du code relatif au type de jeu à un dispositif à mémoire de stockage des diverses informations relatives aux grilles de jeu, qui au cours de la phase 51 renvoie en retour une table de zones.

Au cours de la phase 52, on procède à la recherche des croix dans les zones du billet où elles ont été placées.

Au cours de la phase 53, il y a renvoi à l'unité centrale, des informations relatives à la table et aux croix placées par le joueur sur le billet et matérialisées par leurs coordonnées. L'enregistrement des données relatives à un bulletin est alors achevé.

Le traitement d'un reçu va maintenant être décrit en référence à l'organigramme de la Fig.8.

Après avoir établi au cours de la phase 42 évoquée à l'occasion de la description de la Fig.7 que le document introduit dans le dispositif d'analyse est un reçu, on recherche au cours de la phase 55, les bords droits de ce reçu.

Puis au cours de la phase 56, on calcule l'inclinaison du reçu et au cours de la phase 57, on procéde à la recherche de la zone 30 contenant le code à barres qui est représenté à la Fig.5.

Au cours de la phase 58, on procéde au rattrapage de l'inclinaison calculée au cours de la phase 56.

Au cours de la phase 59, on établit un histogramme horizontal d'une zone d'environ 20% de la zone 30 contenant le code à barres suivi d'un filtrage et d'un lissage numériques effectués au cours de la phase 60.

Au cours de la phase 61, on recherche le front descendant dans la plus grande surface de la courbe de l'histogramme 33 (Fig.5).

Au cours de la phase 62, on se cale sur le plus grand front descendant correspondant au centre du code barre.

Au cours de la phase 63, on détermine les zones adjacentes 31,32 (Fig.5) représentatives des signaux d'horloge de données respectivement.

Au cours de la phase 64, on établit l'histogramme sur les codes dans la zone des signaux d'horloge 31.

Au cours de la phase 65, on procède au lissage et à l'extraction des bits d'horloge ainsi qu'à une remise à l'échelle par établissement de moyenne.

Au cours de la phase 66, on détermine si le nombre de signaux d'horloge est correct. Dans la négative, le reçu est considéré comme étant illisible et est rejeté. Dans l'affirmative, on passe à la phase 67 dans laquelle, à partir des signaux d'horloge, on détermine les zones d'échantillonnage des données ou fenêtres 37 par déphasage d'une demi-période des signaux d'horloge.

Au cours de la phase 68, on recherche les données dans chaque zone ou fenêtre 38 correspondant à la fenêtre 37, en procédant à une discrimination par seuil et en considérant comme valables les données représentées par une fraction déterminée de nombre total de points, de deux tiers par exemple.

Au cours de la phase 69, on procède à la remise en forme quatre bits par quatre bits des signaux d'horloge, qui sont au nombre de 60 par exemple, c'est à dire quinze fois quatre bits.

Au cours de la phase 70, on calcule la valeur binaire correspondante que l'on transmet à l'unité centrale.

L'examen du numéro de validation du reçu est ainsi achevé.

Le fonctionnement de l'ensemble du dispositif suivant l'invention va maintenant être précisé en référence aux Fig.1 et 2.

Lorsque les détecteurs 17,18 détectent la présence d'un document à l'entrée du dispositif, l'information est transmise à l'unité de traitement 5 qui contrôle le dispositif analyseur et le moteur pas à pas 4. L'unité de traitement active alors les diodes électroluminescentes 10 (Fig.2) du dispositif d'analyse et celui-ci commence à balayer une ligne.

Quand le document est parallèle à la source lumineuse selon l'agencement indiqué plus haut, l'unité centrale 5 commande le moteur pas à pas 4 de façon qu'une ligne soit analysée après chaque avance d'un pas.

Ensuite, l'unité centrale 5 utilise les signaux délivrés par le système de détection d'entrée du dispositif analyseur constitué par le détecteur 17 et 18 et le circuit 19 pour déterminer si il reste encore une partie du document à analyser.

Dès que le système de détection ne voit plus de document à l'entrée, il transmet l'information d'absence de document à l'unité centrale 5 qui calcule la différence de position entre la ligne en cours d'analyse par le dispositif analyseur, et le bord arrière du document pour établir le nombre de pas que le moteur 4 doit effectuer pour que l'analyse du document puisse se terminer jusqu'au bout.

L'image est analysée ligne par ligne avec par exemple une résolution de 40 pas par cm et chaque ligne possède une résolution de 80 pas par cm.

La résolution verticale peut être modifiée par modification du rapport de transmission entre l'arbre de sortie du moteur pas à pas 4 et le rouleau 2 d'entraînement des documents.

La résolution verticale dépend de la construction du détecteur d'images 1.

Au cours des opérations d'exploration d'un document, les données analysées ligne par ligne par le dispositif, sont transmises par l'unité de traitement à la mémoire 6 de stockage de données en vue de leur transmission ultérieure vers l'unité centrale à laquelle est associé le dispositif suivant l'invention.

Dans l'exemple qui vient d'être décrit, la source lumineuse du lecteur d'image est formée d'une série de diodes possédant des éléments de couleur rouge d'une longueur d'onde de 650 à 670 nanomètres.

On peut également envisager d'associer à une première série de diodes électroluminescentes des éléments de filtrage d'une première couleur et d'associer à au moins une autre série de diodes électroluminescentes, des éléments de filtrage d'au moins une autre couleur et de rendre ainsi le lecteur aveugle à deux couleurs ou plus.

On peut également envisager de substituer aux diodes électroluminescentes un tube à décharge émettant directement une lumière monochromatique ou bien associé à un élément de filtrage approprié.

## Revendications

1. Dispositif d'analyse de bulletins jeu ou de reçus comprenant des moyens (2,4) d'introduction du support (3), des moyens (1) de lecture des informations se trouvant sur le support, des moyens (5) de traitement des informations lues sur le support en vue de leur conversion en données numériques et de leur transmission vers une unité centrale de gestion des jeux, dans lesquels les moyens (1) de lecture des informations se trouvant sur le support comprennent un lecteur optique aveugle à une seule couleur pour l'ensemble de l'analyse dans laquelle des informations fixes sont imprimées sur le bulletin et sensible à d'autres couleurs, afin de ne prendre en compte que les informations variables (27) de jeu et les informations fixes (23,24,25) de cadrage du bulletin et de désignation du type de jeu auquel il appartient, imprimées dans ces autres couleurs, caractérisé en ce que lesdits moyens de traitement (5) comprennent pour l'analyse des bulletins de jeu, des moyens de génération de systèmes de repérage correspondant au type de jeu auquel appartient le bulletin en vue de la reconstitution des zones à analyser du bulletin par superposition aux données variables et aux données fixes de cadrage et de type de jeu, des données fixes de système de repérage auxquelles le lecteur d'image a été rendu aveugle.

2. Dispositif d'analyse suivant la revendication 1, dans lequel le lecteur optique (1) comporte une source de lumière linéaire s'étendant sur la dimension transversale du document à analyser et des éléments photosensibles situés sur le trajet de la lumière émise par la source et réfléchie par le document à analyser, caractérisé en ce que ladite source de lumière monochromatique comprend une série de diodes électroluminescentes (10) émettant des faisceaux monochromatiques, et en ce qu'aux diodes électroluminescentes (10) sont associés des éléments de filtrage et de focalisation (11) constitués par des lentilles épaisses assurant le chevauchement entre faisceaux sortant de lentilles voisines pour que la lumière émise par l'ensemble des diodes électroluminescentes ait l'aspect d'un trait lumineux monochromatique continu.

3. Dispositif d'analyse suivant la revendication 1, dans lequel le lecteur optique (1) comporte une source de lumière linéaire s'étendant sur la dimension transversale du document à analyser et des éléments photosensibles situés sur le trajet de la lumière émise par la source et réfléchie par le document à analyser, caractérisé en ce que la source de lumière monochromatique est constituée par au moins un tube à décharge émettant dans ladite couleur à laquelle le dispositif est aveugle et associé à un filtre disposé sur le trajet de la lumière entre la source et les éléments photosensibles.

4. Dispositif d'analyse suivant l'une des revendictions 1 à 3, caractérisé en ce que les moyens de traitement (5) comprennent en outre pour l'analyse de reçus, des moyens de lecture de codes barres (30,31,32) correspondant aux numéros de validation des bulletins de jeu.

5. Dispositif d'analyse suivant l'une des revendications 1 à 4, caractérisé en ce qu'il comporte en outre des moyens (17,18,19) de détection de la présence et de la nature des documents présentés au dispositif d'analyse, constitués par au moins deux détecteurs (17,18) disposés à une distance légèrement supérieure à la dimension transversale à la direction de déplacement du document de plus petite dimension à analyser, un détecteur étant actionné par un document de plus petite dimension et au moins deux détecteurs étant actionnés par un document de plus grande dimension, et en ce que les détecteurs (17,18) sont connectés à un circuit (5) de contrôle des signaux de commande du moteur pas à pas (4) d'entraînement du rouleau du dispositif d'analyse et de signaux correspondant à la dimension et par conséquent à la nature du document présenté au dispositif en vue de la mise en oeuvre de moyens correspondants contenus dans lesdits moyens de traitement (5).

6. Dispositif d'analyse suivant l'une des revendications 1 à 5, caractérisé en ce que l'axe du rouleau (2) et l'axe optique des conducteurs de lumière (14) présentent un décalage dans le sens de l'introduction d'un document pour permettre au bord avant de ce document de réfléchir la lumière émise par la source de lumière monochromatique indiquant ainsi la présence du document.

7. Dispositif d'analyse suivant l'une des revendications 2 à 6, caractérisé en ce qu'il comporte en outre des moyens de contrôle du parallélisme du bord du document et de la source de lumière linéaire (10) par détermination d'un nombre minimum d'éléments photosensibles (16) devant recevoir de la lumière réfléchie par le bord du document ou bien d'une distance minimale entre deux éléments photosensibles éclairés lors de la mise en place du document dans le dispositif et de commande des moyens de traitement (5) pour qu'ils actionnent le moteur électrique pas-à-pas (4) d'entraînement du rouleau (2) lorsque le contrôle du parallélisme indique que le défaut de parallélisme entre le document et la source est tolérable.

8. Dispositif d'analyse suivant l'une des revendications 2 à 7, caractérisé en ce qu'il comporte des moyens (9a) de contrôle de l'intensité lumineuse de la source lumineuse connectés aux moyens de traitement (5), elle-même reliée à un comparateur (8) entre un signal lu relatif à la luminosité de la source et un signal de seuil délivré par une source de signal (9).

9. Dispositif d'analyse suivant l'une des revendications 1 à 8, caractérisé en ce que le système de repérage est une grille correspondant à une grille de jeu portée par un bulletin de jeu.

## Claims

1. Device for analysing game tickets or receipts, comprising means (2, 4) for the introduction of a storage medium (3), means (1) for reading data disposed on the storage medium, means (5) for processing the data read on the storage medium in order to convert them into digital data and transmit them to a central games control unit, in which the means (1) for reading the data disposed on the storage medium comprise an optical reader which, for the analysis as a whole, is blind to a single colour in which fixed data are printed on the ticket and is sensitive to other colours in order to take account solely of the variable game data (27) and of the fixed data (23, 24, 25) relating to the frame line of the ticket and to the designation of the type of game to which it belongs which are printed in these other colours, characterized in that the said processing means (5) comprise, for the analysis of game tickets, means for generating position-finding systems corresponding to the type of game to which the ticket belongs in order to reconstitute regions of the ticket to be analyzed by superposition, on the variable data and on the fixed frame-line and game-type data, of fixed data of the position-finding system to which the image reader has been rendered blind.

2. Analysing device according to Claim 1, in which the optical reader (1) includes a linear light source extending along the transverse dimension of the document to be analyzed and light-sensitive elements situated on the path of the light emitted by the source and reflected by the document to be analyzed, characterized, in that the said monochromatic light source comprises a series of light-emitting diodes (10) emitting monochromatic beams, and in that filtering and focusing elements (11) constituted by thick lenses are associated with the light-emitting diodes ensuring an overlap between beams emerging from adjacent lenses so that the light emitted by the set of light-emitting diodes has the appearance of a continuous line of monochromatic light.

3. Analysing device according to Claim 1, in which the optical reader (1) includes a linear light source extending along the transverse dimension of the document to be analyzed and light-sensitive elements situated on the path of the light emitted by the source and reflected by the document to be analyzed, characterized in that the monochromatic light source is constituted by at least one discharge tube emitting in the said colour to which the device is blind and associated with a filter disposed on the path of the light between the source and the light-sensitive elements.

4. Analysing device according to any one of Claims 1 to 3, characterized in that the processing means (5) also comprise, for the analysis of receipts, means (30, 31, 32) for reading bar codes corresponding to the validation of game tickets.

5. Analysing device according to any one of Claims 1 to 4, characterized in that it also includes means (17, 18, 19) for detecting the presence and the nature of documents presented to the analysing device, constituted by at least two detectors (17, 18) spaced by a distance slightly greater than the dimension transverse the direction of movement of the smallest document to be analyzed, one detector being activated by a document with a smaller dimension and at least two detectors being activated by a document with a larger dimension, and in that the detectors (17, 18) are connected to a circuit (5) for controlling signals for operating the stepping motor (4) for driving the roller of the analysing device, and signals corresponding to the dimension, and consequently to the nature, of the document presented to the device, in order to put into operation corresponding means contained in the said processing means (5).

6. Analysing device according to any one of Claims 1 to 5, characterized in that the axis of the roller (2) and the optical axis of light conductors (14) are offset in the direction of introduction of a document to allow the front edge of this document to reflect the light emitted by the monochromatic light source thus indicating the presence of the document.

7. Analysing device according to any one of Claims 2 to 6, characterized in that it also includes means for checking the parallelism of the edge of the document and of the linear light source (10) by the determination of a minimum number of light-sensitive elements (16) which should receive the light reflected by the edge of the document, or of a minimum distance between two light-sensitive elements which are illuminated when the document is placed in the device, and controlling the processing means (5) so that they activate the electric stepping motor (4) for driving the roller (2) when the parallelism check indicates that the error in the parallelism between the document and the source is tolerable.

8. Analysing device according to any one of Claims 2 to 7, characterized in that it includes means (9a) for checking the luminous intensity of the light source, connected to the processing means (5) which itself is connected to a comparator (8) of a signal read, relating to the luminosity of the source, and a threshold signal supplied by a signal source (9).

9. Analysing device according to any one of Claims 1 to 8, characterized in that the position-finding system is a grid corresponding to a game grid carried by a game ticket.

## Patentansprüche

1. Vorrichtung zur Analyse von Spielscheinen oder Ablieferungsscheinen, die Einrichtungen (2, 4) zum Einführen des Datenträgers (3), Einrichtungen (1) zum Lesen der Informationen, die sich auf dem Datenträger befinden, Einrichtungen (5) zum Bearbeiten der Informationen, die von dem Datenträger gelesen wurden, im Hinblick auf deren Umwandlung in digitale Daten und deren Übermittlung an einen Zentralrechner der Lotteriegesellschaft, umfaßt, von denen die Einrichtungen (1) zum Lesen der Informationen, die sich auf dem Datenträger befinden, einen optischen Leser umfassen, der bei dem zu analysierenden Satz hinsichtlich einer einzigen Farbe blind ist, in der die feststehenden Informationen auf dem Schein aufgedruckt sind, und empfindlich gegenüber anderen Farben, um nur die variablen Spielinformationen (27) und die feststehenden Informationen (23, 24, 25) am Spielscheinrand und die Bezeichnung des Spieltyps, den er betrifft, zu erfassen, die in diesen anderen Farben aufgedruckt sind, dadurch gekennzeichnet, daß die genannten Bearbeitungseinrichtungen (5) für die Analyse der Spielscheine Einrichtungen zur Bildung von Registersystemen aufweisen, die dem Spieltyp entsprechen, für die der Schein bestimmt ist, im Hinblick auf die Wiederherstellung der Bereiche zum Abtasten des Spielscheins durch Überlagerung der feststehenden Daten des Registersystems, gegenüber denen der Bildleser blind gemacht worden ist, auf die variablen Daten und auf die feststehenden Daten des Randes und des Spieltyps.

2. Analysevorrichtung nach Anspruch 1, bei der der optische Leser (1) eine lineare Lichtquelle, die sich über das Quermaß des zu analysierenden Dokumentes erstreckt, und lichtempfindliche Elemente, die auf dem Weg des Lichtes angeordnet sind, das von der Quelle ausgestrahlt und von dem zu analysierenden Dokument reflektiert wird, aufweist, dadurch gekennzeichnet, daß die genannte monochromatische Lichtquelle eine Reihe von Elektrolumineszenzdioden (10) umfaßt, die monochromatische Strahlbündel aussenden, und dadurch, daß den Elektrolumineszenzdioden (10) Elemente (11) zum Filtern und Fokussieren zugeordnet sind, gebildet durch starke Linsen, die die Überlappung zwischen den Strahlbündeln sicherstellen, die aus benachbarten Linsen austreten, damit das Licht, das aus der Anordnung der Elektrolumineszenzdioden austritt, das Aussehen eines kontinuierlichen monochromatischen Lichtstrahls erhält.

3. Analysevorrichtung nach Anspruch 1, bei der der optische Leser (1) eine lineare Lichtquelle, die sich über das Quermaß des abzutastenden Dokumentes erstreckt, und lichtempfindliche Elemente, die über dem Weg des Lichtes angeordnet sind, das von der Quelle ausgestrahlt und von dem zu analysierenden Dokument reflektiert wird, aufweist, dadurch gekennzeichnet, daß die Quelle des monochromtischen Lichtes aus mindestens einer Entladungsröhre gebildet ist, welche die besagte Farbe ausstrahlt, gegenüber der die Vorrichtung blind ist, und die einem Filter zugeordnet ist, der auf dem Weg des Lichtes zwischen der Quelle und den lichtempfindlichen Elementen angeordnet ist.

4. Analysevorrichtung nach einem der Ansprüche 1 bis 3, dadurch gekennzeichnt, daß die Bearbeitungseinrichtungen (5) weiterhin für die Analyse der Ablieferungsscheine Einrichtungen zum Lesen von Strichcodes (30, 31, 32), die den Gültigkeitsnummern der Spielscheine entsprechen, umfassen.

5. Analysevorrichtung nach einem der Ansprüche 1 bis 4, dadurch gekennzeichnet, daß sie weiterhin Einrichtungen (17, 18, 19) zum Erfassen des Vorliegens und Art der der Analysevorrichtung vorgelegten Dokumente umfaßt, gebildet durch mindestens zwei Detektoren (17, 18), angeordnet in einem Abstand, der etwas oberhalb des Maßes quer zur Bewegungsrichtung des Dokumentes mit kleinster, zu analysierender Abmessung ist, wobei ein Detektor durch ein Dokument der kleinsten Abmessung aktiviert wird und mindestens zwei Abtaster durch ein Dokument größerer Abmessung aktiviert werden, und dadurch, daß die Detektoren (17, 18) mit einer Steuerschaltung (5) für die Befehlssignale des Schrittmotors (4) für die Antriebswalze der Analysevorrichtung und für Signale, die der Abmessung und folglich der Art des der Vorrichtung vorgelegten Dokumentes entsprechen, verbunden sind, im Hinblick auf das Betreiben der entsprechenden Einrichtungen, welche in den besagten Bearbeitungseinrichtungen (5) enthalten sind.

6. Analysevorrichtung nach einem der Ansprüche 1 bis 5, dadurch gekennzeichnet, daß die Achse der Walze (2) und die optische Achse der Lichtleiter (1) eine Versetzung in der Richtung der Einführung eines Dokumentes zeigen, damit der vordere Rand des Dokuments das durch die Quelle monochromatischem Lichtes ausgestrahlte Licht reflektieren und somit das Vorliegen des Dokumentes anzeigen kann.

7. Analysevorrichtung nach einem der Ansprüche 2 bis 6, dadurch gekennzeichnet, daß sie weiterhin Einrichtungen zum Kontrollieren der Parallelität des Dokumentenrandes und der linearen Lichtquelle (10) umfaßt, durch Bestimmung einer minimalen Anzahl von lichtempfindlichen Elementen (16), die das von dem Dokumentenrand reflektierte Licht empfangen müssen, oder auch eines minimalen Abstands zwischen zwei lichtempfindlichen beleuchteten Elementen beim Einrichten des Dokumentes in der Vorrichtung und der Steuerung der Bearbeitungseinrichtungen (5), damit sie den elektrischen Schrittmotor (4) zum Antrieb der Walze (2) aktivieren, wenn die Parallelitätskontrolle anzeigt, daß das Fehlen der Parallelität zwischen dem Dokument und der Quelle tolerierbar ist.

8. Analysevorrichtung nach einem der Ansprüche 2 bis 7, dadurch gekennzeichnet, daß sie Einrichtungen (9a) zum Steuern der Lichtstärke der Lichtquelle, die mit den Bearbeitungseinrichtungen (5) verbunden sind, umfaßt, welche selbst an einen Komparator (8) für ein gelesenes Signal, das sich auf die Lichtstärke der Quelle bezieht, und ein Schwellensignal, ausgegeben von einer Signalquelle (9), angeschlossen ist.

9. Analysevorrichtung nach einem der Ansprüche 1 bis 8, dadurch gekennzeichnet, daß das Registersystem ein Raster ist, das dem Spielraster auf dem Spielschein entspricht.
